# FASCICULE DE BREVET EUROPEEN

(11) **EP 0 928 661 B1**
(45) Date de publication et mention de la délivrance du brevet: **30.07.2003**
(21) Numéro de dépôt: 98470001.3
(22) Date de dépôt: 07.01.1998
(51) Int. Cl.: B23Q 5/40, B23Q 1/54

(54) **Guidage linéaire pour machine outil**
Linearführung für Werkzeugmaschinen
Linear guide for machine tool

(43) Date de publication de la demande: 14.07.1999
(73) Titulaire: Constructions Mécaniques des Vosges, 88320 Rozières sur Mouzon (FR)
(72) Inventeur: Wildenberg, François, 88140 Contrexeville (FR)
(74) Mandataire: Poupon, Michel

(56) Documents cités:
- EP-A- 0 482 268
- WO-A-91/03145
- GB-A- 2 289 002
- US-A- 4 403 389
- US-A- 4 600 342

## Description

La présente invention a pour objet un dispositif de guidage linéaire, utilisable dans les machines-outils, en particulier mais non limitativement des hexapodes tels que décrits par exemple dans le brevet EP 0 489 857.

Dans les systèmes de guidage linéaire connus, un chariot ou patin est monté mobile en translation sur un rail.

Les dispositifs de ce type ont l'inconvénient d'être fortement déséquilibréS (asymétriques) et relativement encombrants.

La présente invention a pour objet de remédier à ces inconvénients.

Conformément à l'invention on propose un dispositif de guidage linéaire, utilisable dans les machines-outils, en particulier mais non limitativement des hexapodes, caractérisé en ce qu'il comporte en combinaison :
- un rail percé totalement ou partiellement selon une direction parallèle à son axe longitudinal,
- une vis à bille dont l'écrou est fixé sur le rail, la vis à bille pénétrant totalement ou partiellement dans le trou percé dans le rail.

L'écrou pourra être fixé sur le rail directement ou par l'intermédiaire de pièces.

Dans une première variante de mise en oeuvre, une extrémité de la vis à bille est bloquée longitudinalement et entrainée en rotation.

Le chariot supporté par le rail est également bloqué en rotation.

On comprend alors que l'entrainement en rotation de la vis à bille entraine le déplacement longitudinal de l'écrou donc du rail qui en est solidaire.

L'avantage essentiel réside dans l'obtention d'une meilleure symétrie de travail avec un guidage linéaire, tout en obtenant des résultats au moins identiques à ceux des dispositifs connus avec un encombrement réduit.

Selon une autre variante de mise en oeuvre on pourra fixer sur l'écrou de la vis à bille la tête de lecture d'une règle de mesure.

Selon une troisième variante de mise en oeuvre, la vis à bille sera entrainée en translation, l"écrou étant entrainé uniquement en rotation.

On comprendra mieux l'invention à l'aide de la description faite ci-après d'un mode de mise en oeuvre de l'invention donné à titre d'exemple non limitatif, en référence aux figures annexées dans lesquelles :
- la figure 1 est une vue en coupe longitudinale d'un dispositif conforme à l'invention,
- la figure 2 est une vue en coupe longitudinale d'une variante de mise en oeuvre avec dispositif de mesure du déplacement de la vis par faisceau laser,
- la figure 3 est une vue en coupe longitudinale d'une variante de mise en oeuvre avec dispositif de mesure du déplacement de la vis par règle de mesure.

Le dispositif généralement référencé (1) comporte essentiellement :
- un rail linéaire (2)
- un chariot (3) mobile relativement par rapport au rail et guidé par ou sur celui-ci,
- une vis à bille (4) et son écrou (5).

Le rail (2) est percé d'un trou (6) d'axe parallèle à l'axe longitudinal du rail. Ces deux axes peuvent être confondus.

Le chariot (3) est bloqué en rotation par rapport au rail.

L'écrou (5) de la vis à bille (4) est fixé directement ou indirectement au rail (2) par des moyens (7).

L'extrémité extérieure (par rapport au trou) (6)) de la vis à bille (4) est bloquée longitudinalement.

On comprendra que la rotation de la vis à bille entraine le déplacement de l'écrou donc du rail, le chariot restant fixe longitudinalement par rapport au rail qui fait office de glissière.

Selon une variante de mise en oeuvre (non représentée), on pourra avec un dispositif de ce type, prévoir de fixer, directement ou indirectement, la tête de lecture d'un corps de règle sur l'écrou de lavis à bille.

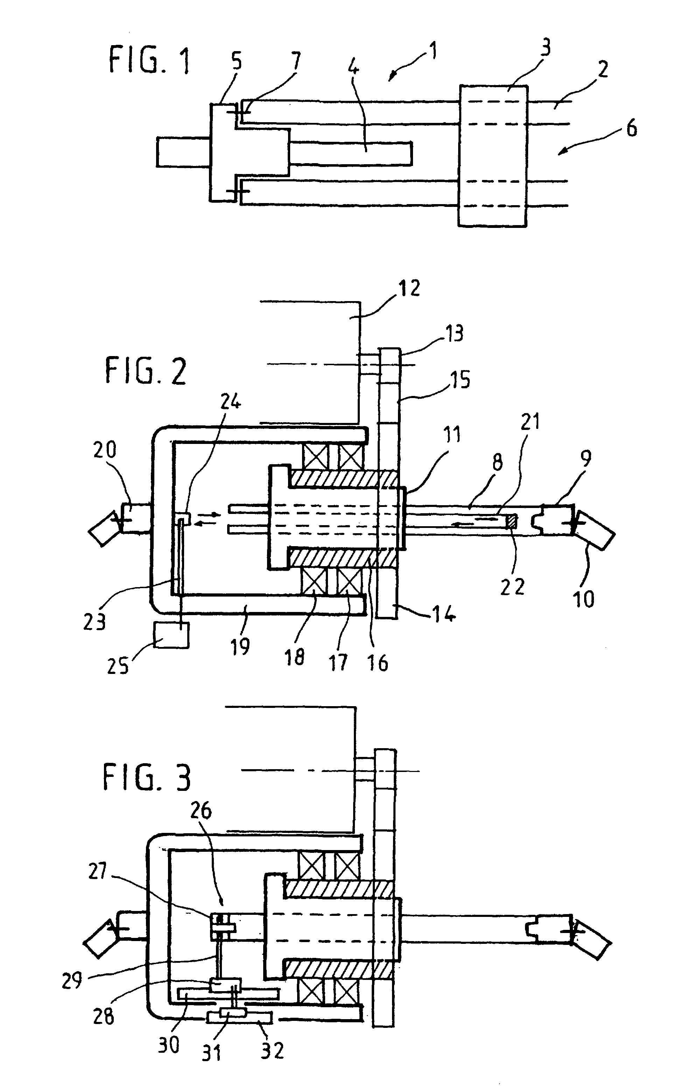

On se référera à la figure 2.

Dans cette variante de mise en oeuvre, la vis à bille (8) est animée d'un mouvement principal de translation. Elle est dispoSée en tre les deux cardans (9,10) d'une jambe d'hexapode et permet de faire varier la longueur de ladite jambe.

Pour parvenir à ce résultat, l'écrou (11) de la vis à bille est entrainé à rotation à partir d'un moteur (12) par des poulies menante (13) et menée (14) reliées par une courroie de transmission (15).

L'écrou (11) est monté par un palier (16) et des roulements (17,18) dans un fût (19) formant cage, solidaire de la partie fixe en translation (20) de la jambe de l'hexapode correspondante.

Cette structure se retrouve de manière identique dans le dispositif de la figure 3.

Le problème rencontré à ce stade est que la vis à bille est, en plus du mouvement principal de translation, animée d'un léger mouvement secondaire parasite d'oscillation autour de son axe, la combinaison étant un mouvement légèrement ondulatoire ou de fouettage : les mesures de déplacement réel de la vis donc de la jambe de l'hexapode sont en conséquence très difficiles.

Ceci est obtenu dans la variante de la figure 2 en prévoyant que la vis à bille soit, conformément à l'invention, partiellement ou totalement alésée selon un trou borgne (21).

Dans le fond dudit alésage (21) on dispose un miroir (22). Une fibre optique (23) est disposée entre une optique laser (24) solidaire du fût et un dispositif de source et de mesure laser (25).

On réalise ainsi un système compact et fiable de mesure précise du déplacement de la jambe. Bien entendu, la fibre optique peut être remplacée par tout système fonctionnellement équivalent (miroir avec renvoi d'angle, etc...).

Dans la variante de la figure 3, on dispose en extrémité libre (26) de la vis à bille un ensemble oscillant (27) comportant par exemple des roulements à billes à rouleaux ou à aiguilles.

Cet ensemble est connecté par une liaison mécanique (29) au chariot (28) d'un système de guidage linéaire (30).

Tout cet équipage est ensuite lui-même relié au lecteur (31) d'une règle de mesure (32).

## Revendications

1. Dispositif de guidage linéaire, utilisable dans les machines-outils, en particulier des hexapodes, comportant en combinaison :
- un rail (2) percé totalement ou partiellement par un perçage selon une direction parallèle à son axe longitudinal,
- une vis à bille (4) dont l'écrou (5) est fixé sur le rail de manière à faire saillie, au moins en partie, extérieurement au dit perçage longitudinal du rail, la vis à bille pénétrant totalement ou partiellement dans le trou percé dans le rail.

2. Dispositif selon la revendication 1, **caractérisé en ce que** l'extrémité (6) de la vis à bille (4) est bloquée longitudinalement.

3. Dispositif selon la revendication 1, **caractérisé en ce que** la vis à bille (4) est animée d'un mouvement principal de translation et est disposée entre les deux cardans (9,10) d'une jambe d'hexapode pour permettre de faire varier la longueur de ladite jambe.

4. Dispositif selon la revendication 3, **caractérisé en ce que** l'écrou (11) de la vis à bille est entrainé à rotation à partir d'un moteur (12) par des poulies menante (13) et menée (14) reliées par une courroie de transmission (15), l'écrou étant monté par un palier (16) et des roulements (17,18) dans un fût (19) formant cage, solidaire de la partie fixe en translation (20) de la jambe de l'hexapode correspondante.

5. Dispositif selon la revendication 4, **caractérisé en ce que** dans le fond d'un alésage de la vis à bille est disposé un miroir (22), une fibre optique (23) étant disposée entre une optique laser (24) solidaire du fût et un dispositif de source et de mesure laser (25).

6. Dispositif selon la revendication 4, **caractérisé en ce qu'**il comporte en extrémité libre (26 de la vis à bille un ensemble oscillant (27) comportant des roulements à billes à rouleaux ou à aiguilles, cet ensemble étant connecté par une liaison mécanique (29) au chariot (28) d'un système de guidage linéaire (30), tout cet équipage étant ensuite lui-même relié au lecteur (31) d'une règle de mesure (32).

## Patentansprüche

1. Einrichtung zur linearen Führung, die bei werkzeugmaschinen verwendbar ist, insbesondere bei Hexapoden, die in Kombination aufweist:
- eine Schiene (2), die vollständig oder teilweise durch eine Lochung in einer zu ihrer Längsachse parallelen Richtung mit einer Durchbrechung versehen ist,
- eine Kugelrollspindel (4), deren Mutter (5) auf der Schiene derart befestigt ist, dass sie mindestens teilweise außen aus der Längsdurchbrechung der Schiene vorsteht, wobei die Kugelrollspindel vollständig oder teilweise die Durchbrechung in der Schiene durchdringt.

2. Einrichtung nach Anspruch 1, **dadurch gekennzeichnet, dass** ein Ende (6) der Kugelrollspindel (4) in Längsrichtung blockiert ist.

3. Einrichtung nach Anspruch 1, **dadurch gekennzeichnet, dass** die Kugelrollspindel (4) eine im Wesentlichen translatorische Bewegung ausführt und zwischen zwei Kardangelenken (9, 10) eines Hexapodbeines angeordnet ist, um Änderungen der Länge des genannten Beines zu ermöglichen.

4. Einrichtung nach Anspruch 3, **dadurch gekennzeichnet, dass** die Mutter (11) der Kugelrollspindel mittels eines Motors (12) durch eine angetriebene Riemenscheibe (13) und eine getriebene Riemenscheibe (14) in Drehbewegung versetzt wird, die durch einen Transmissionsriemen (15) verbunden sind, wobei die Mutter (11) mittels einer Lagerstelle (16) und Lager (17, 18) in einem einen Käfig bildenden Topf (19) gelagert ist, der mit einem unverschieblichen Teil (20) des Beines des entsprechenden Hexapods fest verbunden ist.

5. Einrichtung nach Anspruch 4, **dadurch gekennzeichnet, dass** am Boden einer Bohrung der Kugelrollspindel ein Spiegel (22) angeordnet ist, wobei eine optische Faser (23) zwischen einem mit dem Topf fest verbundenen optischen Laser (24) und einer Laserquellen- und -messeinrichtung (25) angeordnet ist.

6. Einrichtung nach Anspruch 4, **dadurch gekennzeichnet, dass** sie am freien Ende (26) der Kugelrollspindel eine Oszillationseinrichtung (27) aufweist, die Kugel- oder Nadellager aufweist, wobei diese Baugruppe mittels einer mechanischen Verbindung (29) mit dem Schlitten (28) einer Einrichtung (30) zur linearen Führung verbunden ist und wobei die gesamte Anordnung schließlich selbst mit einem Abtaster (31) eines Messreglers (32) verbunden ist.

## Claims

1. Apparatus for linear guidance, usable in machine tools, in particular hexapods, comprising in combination:
- a rail (2) pierced totally or partially by a piercing in a direction parallel to its longitudinal axis,
- a ball screw (4), the nut (5) of which is secured on the rail so as to protrude, at least in part, externally beyond said longitudinal piercing of the rail, the ball screw penetrating totally or partially into the hole pierced in the rail.

2. Apparatus according to claim 1, **characterised in that** the end (6) of the ball screw (4) is longitudinally locked.

3. Apparatus according to claim 1, **characterised in that** the ball screw (4) is actuated by a principal displacement movement and is disposed between the two universal joints (9, 10) of a hexapod leg to permit the length of said leg to be varied.

4. Apparatus according to claim 3, **characterised in that** the nut (11) of the ball screw is rotationally entrained from a motor (12) by a leading pulley (13) and a led pulley (14), which pulleys are connected by a transmission belt (15), the nut being mounted by a bearing (16) and rollers (17, 18) in a drum (19) which forms a cage, integral with the fixed displacement portion (20) of the leg of the corresponding hexapod.

5. Apparatus according to claim 4, **characterised in that** a mirror (22) is disposed in the base of a bore of the ball screw, an optical fibre (23) being disposed between a laser optic (24), integral with the drum, and a laser source and measurement apparatus (25).

6. Apparatus according to claim 4, **characterised in that** it comprises, at the free end (26) of the ball screw, an oscillating assembly (27) which comprises roller- or needle-type ball bearings, this assembly being connected by a mechanical connection (29) to the carriage (28) of a linear guidance system (30), all of this equipment then being itself connected to the reader (31) of a measuring ruler (32).
